# EUROPEAN PATENT SPECIFICATION

(11) **EP 4 131 092 B1**
(45) Date of publication and mention of the grant of the patent: **29.07.2026**
(21) Application number: 21878998.0
(22) Date of filing: 21.06.2021
(51) Int. Cl.: G06N 20/00, G16Y 20/40, G16Y 40/20

(54) **FEDERATED LEARNING-BASED INTERNET OF THINGS DATA SERVICE METHOD AND APPARATUS, DEVICE, AND MEDIUM**
VERFAHREN UND VORRICHTUNG, VORRICHTUNG UND MEDIUM FÜR FÖDERIERTEN LERNBASIERTEN INTERNET-DER-DINGE-DATENDIENST
PROCÉDÉ ET APPAREIL DE SERVICE DE DONNÉES D'INTERNET DES OBJETS BASÉS SUR UN APPRENTISSAGE FÉDÉRÉ, DISPOSITIF ET SUPPORT

(30) Priority: 14.10.2020 CN 202011095961
(43) Date of publication of application: 08.02.2023
(73) Proprietor: Ennew Digital Technology Co., Ltd., Beijing 100020 (CN)
(72) Inventor: ZHANG, Min, Beijing 100020 (CN); GAO, Qing, Beijing 100020 (CN)
(74) Representative: Bayramoglu et al.
(86) International application number: PCT/CN2021/101325
(87) International publication number: WO 2022/077948

(56) References cited:
- WO-A1-2019/216938
- CN-A- 111 370 098
- CN-A- 111 768 008
- CN-A- 111 768 008
- US-A1- 2020 050 578

## Description

### TECHNICAL FIELD

Wherever the term "combined learning" is used in the description, this is to be understood as "federated learning". Embodiments of the present disclosure relate to the field of big data technologies, and in particular, to a combined-learning-based Internet of Things data service method and apparatus, a device and a medium.

### BACKGROUND

The Internet of Things collects, in real time, any object or process that needs to be monitored, connected, interacted with, and collects a variety of required information such as sound, light, heat, electricity, mechanics, chemistry, biology and positions through a variety of apparatuses and technologies such as various information sensors, radio frequency identification technologies, global positioning systems, infrared sensors and laser scanners, to realize ubiquitous connections between things and between things and human through various possible network accesses, thereby realizing intelligent perception, recognition and management of objects and processes. The Internet of Things is an information carrier based on the Internet, conventional telecommunications networks, etc., which enables all ordinary physical objects that can be independently addressed to form an interconnected network.

Existing Internet of Things big data search, sharing, data mining services are still in an immature stage, lack deep trusted mining of data, and have not yet formed systematic standards and protective measures. As a result, a large number of Internet of Things enterprise owners are unwilling or afraid to share their own data resources, thereby seriously affecting rapid progress and development of the Internet of Things under the trend of Internet big data.

Document D1 (WO2019216938A1) provides an application development platform and associated software development kits ("SDKs") that provide comprehensive services for generation, deployment, and management of machine-learned models used by computer applications such as, for example, mobile applications executed by a mobile computing device. In particular, the application development platform and SDKs can provide or otherwise leverage a unified, cross-platform application programming interface ("API") that enables access to all of the different machine learning services needed for full machine learning functionality within the application. In such fashion, developers can have access to a single SDK for all machine learning services.

### SUMMARY

Summary of the present disclosure is used to briefly introduce ideas that will be described in detail later in Detailed Description.

Embodiments of the present disclosure provide a combined-learning-based Internet of Things data service method and apparatus, a device and a medium, so as to solve the technical problems mentioned in Background.

In a first aspect, according to some embodiments of the present disclosure, a federated-learning-based Internet of Things data service method is provided, performed by a processor, and comprising: acquiring a data processing result of an edge computing-side for target user data; performing federated learning training based on a federated learning engine, the data processing result and the target user data, to obtain a federated learning training model; storing the federated learning training model in a target model base; and invoking a service-side requirement by using the target model base, wherein the step of performing federated learning training based on a federated learning engine, the data processing result and the target user data, to obtain a federated learning training model comprises: acquiring an initial model; integrating an objective machine learning algorithm and an objective deep learning algorithm into the federated learning engine; adding the data processing result and the target user data to a sample set, to obtain a sample set after data addition; encrypting data in the sample set after data addition to obtain an encrypted sample set as a training sample set for training the initial model; and performing federated learning training on the initial model by using the training sample set and the federated learning engine, to obtain the federated learning training model.

Preferably, after the step of acquiring a data processing result of an edge computing-side for target user data, the method further comprises:
performing data asset management on the data processing result, wherein the data asset management comprises at least one of the following: metadata management, data asset storage, data quality management, data authorization and delivery management, and data security management.

Preferably, a training sample in the training sample set comprises sample input data and sample output data, and the federated learning training model is trained by taking the sample input data as input and the sample output data as expected output.

Preferably, the step of storing the federated learning training model in a target model base comprises:
encapsulating the federated learning training model to obtain an encapsulated federated learning training model;
generating an interface of the encapsulated federated learning training model, wherein the interface comprises: a management interface and a call interface; and
storing the encapsulated federated learning training model to the target model base in response to determining completion of generation of the interface.

Preferably, the method further comprises:
acquiring a management instruction in response to detecting a management request from a target management user, wherein the management instruction comprises an interface and management content of a managed model; and
processing, based on the management instruction, models in the target model base whose interfaces are the same as the interface of the managed model.

Preferably, the method further comprises:
acquiring the call interface in response to detecting a call request from a target user;
extracting, from the target model base, a model whose interface is the same as the call interface; and
performing, in response to detecting a federated training request from the target user, federated training on the extracted model and at least one model stored by a terminal device of the target user.

In a second aspect, according to some embodiments of the present disclosure, a federated-learning-based Internet of Things data service apparatus is provided, comprising: an acquisition unit configured to acquire a data processing result of an edge computing-side for target user data; a training unit configured to perform federated learning training based on a federated learning engine, the data processing result and the target user data, to obtain a federated learning training model; a storage unit configured to store the federated learning training model in a target model base; and an invoking unit configured to call a service-side requirement by using the target model base, wherein the step of performing federated learning training based on a federated learning engine, the data processing result and the target user data, to obtain a federated learning training model comprises: acquiring an initial model; integrating an objective machine learning algorithm and an objective deep learning algorithm into the federated learning engine; adding the data processing result and the target user data to a sample set, to obtain a sample set after data addition; encrypting data in the sample set after data addition to obtain an encrypted sample set as a training sample set for training the initial model; and performing federated learning training on the initial model by using the training sample set and the federated learning engine, to obtain the federated learning training model.

In a third aspect, according to some embodiments of the present disclosure, an electronic device is provided, including: one or more processors; and a storage apparatus storing one or more programs; the one or more programs, when executed by the one or more processors, causing the one or more processors to perform the method as described in the first aspect.

In a fourth aspect, according to some embodiments of the present disclosure, a computer-readable medium is provided, storing a computer program, wherein, when the program is executed by a processor, the program causes the processor to perform the method as described in the first aspect.

One of the above embodiments of the present disclosure has the following beneficial effect. Target user data is processed, and then combined learning training is performed by using obtained data processing results, so that a combined learning training model meeting a user management and calling requirement can be obtained. Users' requirements for model training and calling are met based on a service-side requirement calling model, which facilitates the users' subsequent use of data.

### BRIEF DESCRIPTION OF THE DRAWINGS

The above and other features, advantages and aspects of the embodiment of the present disclosure will become more obvious with reference to the accompanying drawings and the following specific implementations. Throughout the accompanying drawings, identical or similar reference numerals represent identical or similar elements. It is to be understood that the accompanying drawings are schematic and that components and elements are not necessarily drawn to scale.
FIG. 1 is a schematic diagram of an application scenario of a combined-learning-based Internet of Things data service method according to embodiments of the present disclosure;
FIG. 2 is a flowchart of an embodiment of the combined-learning-based Internet of Things data service method according to the present disclosure;
FIG. 3 is a flowchart of an embodiment of training of a combined learning training model in the combined-learning-based Internet of Things data service method according to the present disclosure;
FIG. 4 is a schematic structural diagram of an embodiment of a combined-learning-based Internet of Things data service apparatus according to the present disclosure; and
FIG. 5 is a schematic structural diagram of an electronic device configured to implement embodiments of the present disclosure.

### DETAILED DESCRIPTION

The embodiments of the present disclosure are described in more detail below with reference to the accompanying drawings.

It is to be noted that the concepts such as "first" and "second" mentioned in the present disclosure are used only to distinguish different apparatuses, modules or units and are not intended to define the sequence or interdependence of functions performed by the apparatuses, modules or units.

It is to be noted that "one" and "more than one" mentioned in the present disclosure are illustrative but not restrictive modifiers, and should be understood by those skilled in the art as "one or more" unless otherwise expressly stated in the context.

Names of messages or information exchanged between a plurality of apparatuses in implementations of the present disclosure are used for illustrative purposes only and are not intended to limit the scope of such messages or information.

The present disclosure is described in detail below with reference to the accompanying drawings and embodiments.

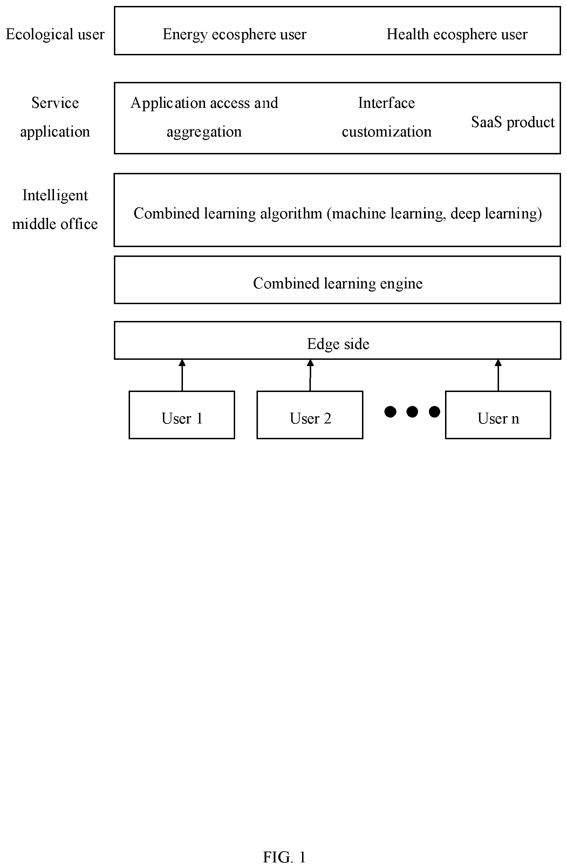

FIG. 1 is a schematic diagram of an application scenario of a combined-learning-based Internet of Things data service method according to some embodiments of the present disclosure.

In the application scenario of FIG. 1, firstly, a data processing result of an edge side for target user data (such as data of User 1) is acquired. Then, combined learning training is performed based on a combined learning engine, the data processing result and the target user data, to obtain a combined learning training model. Next, the combined learning training model is stored in a target model base. Finally, a service-side requirement (such as a scenario in a service application) is invoked by using the target model base. Optionally, the target model base may be presented to users who satisfy a presentation condition (for example, energy ecosphere users, health ecosphere users).

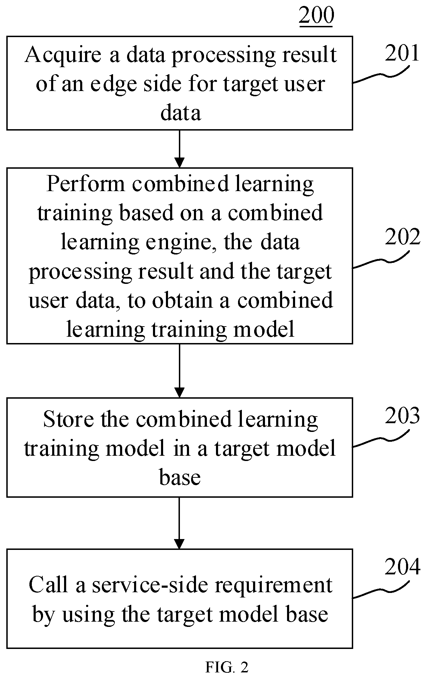

Still refer to FIG. 2 which shows a flow 200 of an embodiment of the combined-learning-based Internet of Things data service method according to the present disclosure. The method may be performed by a computing device. The combined-learning-based Internet of Things data service method includes the following steps.

In step 201, a data processing result of an edge side for target user data is acquired.

In the embodiment, an execution subject of the combined-learning-based Internet of Things data service method may acquire the data processing result in a wired or wireless connection manner. For example, the execution subject may receive the data processing result of the edge side for the target user data as the data processing result. Here, the edge side may be a device with software or hardware that provides storage capabilities for various edge computing, data/models. As an example, functions of the edge side include, but are not limited to at least one of the following: data access, edge computing, data/model storage, local model training, local model deployment, multi-protocol access, communication module/SDK, and intelligent distribution. The edge side supports multi-protocol access, communication module/SDK, intelligent distribution and other functions, which may transform current data into unified-standard data, facilitating subsequent processing such as computing. The target user data may be data stored by an Internet of Things device of a target user.

The data access described above may be expressed as the realization of collecting data of all kinds of devices in a workshop through sensors. Originating from the field of media, edge computing refers to an open platform that integrates network, computing, storage and application core capabilities to provide the nearest service close to one side of an object or data source. Applications thereof are initiated on the edge side, generating faster network service responses and meeting the industry's basic requirements in aspects such as real-time services, application intelligence, security and privacy protection. Edge computing is between physical entities and industrial connections, or at a top end of the physical entities. Through the application of an edge computing technology, error data elimination, data cache and other preprocessing and real-time edge analysis are realized to reduce network transmission load and cloud computing pressure.

It is to be noted that the wireless connection manner may include, but is not limited to, 3G/4G connection, WiFi connection, Bluetooth connection, WiMAX connection, Zigbee connection, ultra wideband (UWB) connection, and other wireless connection manners known now or to be developed in the future.

In step 202, combined learning training is performed based on a combined learning engine, the data processing result and the target user data, to obtain a combined learning training model.

In the embodiment, the execution subject obtains the combined learning training model through the following steps. In a first step, the execution subject acquires an initial model. In a second step, the execution subject integrates a target machine learning algorithm (e.g., a conventional machine learning algorithm) into the combined learning engine. In a third step, the execution subject integrates a target deep learning algorithm into the combined learning engine. In a fourth step, the execution subject adds the data processing result and the target user data to a sample set to obtain a sample set after data addition. In a fifth step, the execution subject encrypts data in the sample set after data addition to obtain an encrypted sample set as a training sample set for training the initial model. In a sixth step, the execution subject performs combined learning training on the initial model by using the training sample set and the combined learning engine, to obtain the combined learning training model. Here, the initial model may be a model untrained or not meeting a preset condition after training. The initial model may also be a model having a deep neural network structure. A storage position of the initial model is not limited in the present disclosure.

In step 203, the combined learning training model is stored in a target model base.

In the embodiment, the execution subject may store the combined learning training model in the target model base through the following steps. In a first step, the execution subject may encapsulate the combined learning training model to obtain an encapsulated combined learning training model. In a second step, the execution subject may generate an interface of the encapsulated combined learning training model. In a third step, the execution subject may store the encapsulated combined learning training model to the target model base in response to determining completion of generation of the interface. Here, the interface includes: a management interface and a call interface. The management interface may be configured to allow a management user (for example, an administrator) to manage the stored model in the target model base. The call interface may be configured to allow a user (for example, a user with a calling requirement) to call the stored model in the target model base. Specifically, the target model base stores at least one model that has been trained and reached a preset condition.

In step 204, a service-side requirement is invoked by using the target model base.

In the embodiment, the execution body may acquire the service-side requirement first. Here, the service-side requirement may a call operation instruction of the user for the model in the target model base. Then, the execution body may extract, from the target model base, a model whose interface is the same as the interface of the model included in the service-side requirement.

In an optional implementation manner of the embodiment, the method further includes: performing data asset management on the data processing result, wherein the data asset management includes at least one of the following: metadata management, data asset storage, data quality management, data authorization and delivery management, and data security management.

In an optional implementation manner of the embodiment, during training and application of the combined learning training model, cloud basic environment management, operation and maintenance management and security management are further included.

In an optional implementation manner of the embodiment, a management instruction is acquired in response to detecting a management request from a target management user, wherein the management instruction comprises an interface and management content of a managed model; and models in the target model base whose interfaces are the same as the interface of the managed model are processed based on the management instruction.

In an optional implementation manner of the embodiment, the call interface is acquired in response to detecting a call request from a target user; a model whose interface is the same as the call interface is extracted from the target model base; and in response to detecting a combined training request from the target user, combined training is performed on the extracted model and at least one model stored by a terminal device of the target user.

One of the above embodiments of the present disclosure has the following beneficial effect. Target user data is processed, and then combined learning training is performed by using obtained data processing results, so that a combined learning training model meeting a user management and calling requirement can be obtained. Users' requirements for model training and calling are met based on a service-side requirement calling model, which facilitates the users' subsequent use of data.

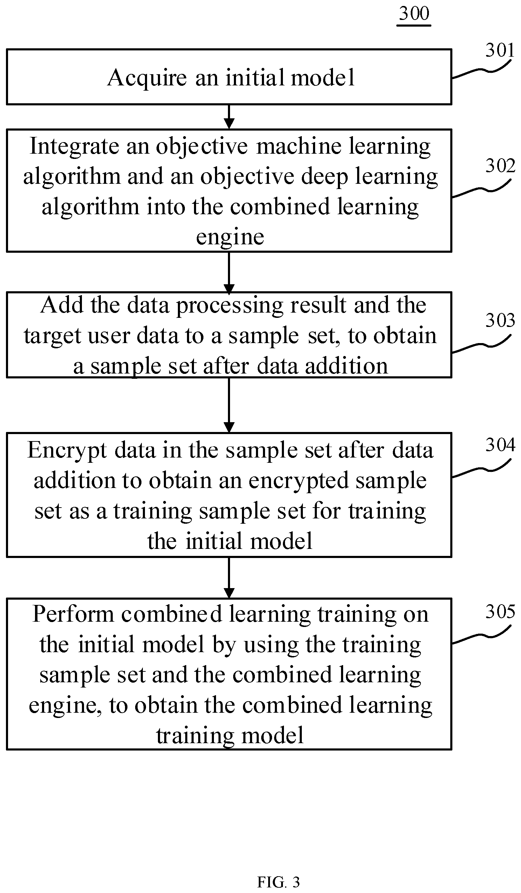

Still refer to FIG. 3 which shows a flowchart 300 of an embodiment of training of a combined learning training model in the combined-learning-based Internet of Things data service method according to the present disclosure. The method may be performed by a computing device. The training method includes the following steps.

In step 301, an initial model is acquired.

In the embodiment, the execution subject may acquire the initial model in a wired or wireless connection manner.

In step 302, an objective machine learning algorithm and an objective deep learning algorithm are integrated into the combined learning engine.

In the embodiment, the execution subject may integrate the objective machine learning algorithm and the objective deep learning algorithm into the combined learning engine. Here, the objective machine learning algorithm and the objective deep learning algorithm may be algorithms supported by the combined learning engine.

In step 303, the data processing result and the target user data are added to a sample set, to obtain a sample set after data addition.

In the embodiment, the execution subject adds the data processing result and the target user data to a sample set. Here, the sample set may be a data set pre-acquired and configured to train the initial model.

In step 304, data in the sample set after data addition is encrypted to obtain an encrypted sample set as a training sample set for training the initial model.

In the embodiment, the execution subject may encrypt the data in the sample set after data addition in a variety of manners. As an example, the execution subject may encrypt the data in the sample set after data addition by dynamic encryption. In another example, the execution subject may encrypt the data in the sample set after data addition by differential privacy. In another example, the execution subject may encrypt the data in the sample set after data addition by secure multi-party computation.

In the embodiment, a training sample in the training sample set includes sample input data and sample output data, and the combined learning training model is trained by taking the sample input data as input and the sample output data as expected output.

In step 305, combined learning training is performed on the initial model by using the training sample set and the combined learning engine, to obtain the combined learning training model.

In the embodiment, the execution subject may start training the initial model by using the acquired training sample set. A training process is as follows. In a first step, a training sample is selected from the training sample set, wherein the training sample includes sample input data and sample output data. In a second step, the execution subject may input the sample input data in the training sample to the initial model. In a third step, outputted data is compared with the sample output data, to obtain an output data loss value. In a fourth step, the execution subject may compare the output data loss value with a preset threshold, to obtain a comparison result. In a fifth step, it is determined according to the comparison result whether the initial model has been trained. In a sixth step, in response to completion of training of the initial training model, the initial model is determined as a trained initial model. Here, the acquired training sample set may be local data of a terminal device of the target user.

The output data loss value described above may be a value obtained by inputting the outputted data and the corresponding sample output data as parameters into an executed loss function. Here, the loss function (such as a square loss function or an exponential loss function) is generally used for estimating a degree of inconsistency between a predicted value (such as the sample output data corresponding to the sample input data) and a real value (such as the data obtained through the above steps) of a model. It is a non-negative real-valued function. Generally, the smaller the loss function, the better the robustness of the model. The loss function may be set according to an actual requirement. As an example, the loss function may be a cross entropy loss function.

In an optional implementation manner of the embodiment, the method further includes: in response to determining that the training of the initial model is not completed, adjusting related parameters in the initial model, and re-selecting a sample from the training sample set and using the adjusted initial model as an initial model to continue the training step.

In an optional implementation manner of the embodiment, the combined learning training model may be trained in different combined learning scenarios in vertical domains (e.g., energy, health).

As can be seen from FIG. 3, compared with the description of the embodiment corresponding to FIG. 2, the flow 300 of the data measurement method in some embodiments corresponding to FIG. 3 reflects the steps of how to obtain a train sample set and train an initial model to obtain a combined learning training model. Thus, according to the solutions described in the embodiments, a combined learning engine may be obtained by integrating an objective machine learning algorithm and an objective deep learning algorithm. The data in the sample set after addition is encrypted, which may improve security of use of data during the training. The trained combined learning training model meets users' requirements for data processing, facilitating the users' subsequent use of data. In addition, the users may select models in the target model base for different service scenarios to their requirements, which improves user experience to some extent.

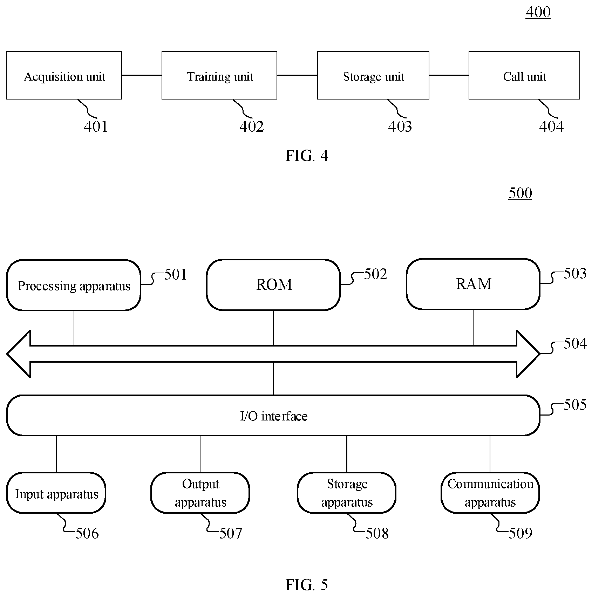

Further referring to FIG. 4, as implementations to the methods in the above figures, the present disclosure provides some embodiments of a combined-learning-based Internet of Things data service apparatus. The apparatus embodiments correspond to the method embodiments in FIG. 2. The apparatus may be specifically applied to a variety of electronic devices.

As shown in FIG. 4, the combined-learning-based Internet of Things data service apparatus 400 according to some embodiments includes: an acquisition unit 401, a training unit 402, a storage unit 403 and a call unit 404. The acquisition unit 401 is configured to acquire a data processing result of an edge side for target user data. The training unit 402 is configured to perform combined learning training based on a combined learning engine, the data processing result and the target user data, to obtain an combined learning training model. The storage unit 403 is configured to store the combined learning training model in a target model base. The call unit 404 is configured to invoke a service-side requirement by using the target model base.

In an optional implementation manner of the embodiment, the combined-learning-based Internet of Things data service apparatus 400 is further configured to: perform data asset management on the data processing result, wherein the data asset management includes at least one of the following: metadata management, data asset storage, data quality management, data authorization and delivery management, and data security management.

The training unit 402 of the combined-learning-based Internet of Things data service apparatus 400 is further configured to: acquire an initial model; integrate an objective machine learning algorithm and an objective deep learning algorithm into the combined learning engine; add the data processing result and the target user data to a sample set, to obtain a sample set after data addition; encrypt data in the sample set after data addition to obtain an encrypted sample set as a training sample set for training the initial model; and perform combined learning training on the initial model by using the training sample set and the combined learning engine, to obtain the combined learning training model.

In an optional implementation manner of the embodiment, a training sample in the training sample set includes sample input data and sample output data, and the combined learning training model is trained by taking the sample input data as input and the sample output data as expected output.

In an optional implementation manner of the embodiment, the storage unit 403 of the combined-learning-based Internet of Things data service apparatus 400 is further configured to: encapsulate the combined learning training model to obtain an encapsulated combined learning training model; generate an interface of the encapsulated combined learning training model, wherein the interface includes: a management interface and a call interface; and store the encapsulated combined learning training model to the target model base in response to determining completion of generation of the interface.

In an optional implementation manner of the embodiment, the combined-learning-based Internet of Things data service apparatus 400 is further configured to: acquire a management instruction in response to detecting a management request from a target management user, wherein the management instruction includes an interface and management content of a managed model; and process, based on the management instruction, models in the target model base whose interfaces are the same as the interface of the managed model.

In an optional implementation manner of the embodiment, the combined-learning-based Internet of Things data service apparatus 400 is further configured to: acquire the call interface in response to detecting a call request from a target user; extract, from the target model base, a model whose interface is the same as the call interface; and perform, in response to detecting a combined training request from the target user, combined training on the extracted model and at least one model stored by a terminal device of the target user.

It may be understood that the units in the apparatus 400 correspond to the steps in the method described with reference to FIG. 2. Thus, the operations, features and beneficial effects described above for the method also apply to the apparatus 400 and the units included therein, which are not described in detail herein.

Refer to FIG. 5 below which is a schematic structural diagram of an electronic device (such as the computing device) 500 configured to implement some embodiments of the present disclosure. A server shown in FIG. 5 is only an example and should not impose any limitations on functionality and scope of use of the embodiments of the present disclosure.

As shown in FIG. 5, the electronic device 500 may include a processing apparatus (such as a central processing unit or a graphics processor) 501, which may execute various appropriate actions and processing according to programs stored in a read-only memory (ROM) 502 or programs loaded from a storage apparatus 508 into a random access memory (RAM) 503. The RAM 503 further stores various programs and data required by operation of the electronic device 500. The processing apparatus 501, the ROM 502 and the RAM 503 are connected to one another via a bus 504. An input/output (I/O) module 505 is also connected to the bus 504.

Generally, the following apparatus may be connected to the I/O interface 505: an input apparatus 506 including, for example, a touch screen, a touchpad, a keyboard, a mouse, a camera, a microphone, an accelerometer, a gyroscope, and the like; an output apparatus 507 including, for example, a liquid crystal display (LCD), a speaker, a vibrator, and the like; a storage apparatus 508 including, for example, a magnetic tape, a hard disk, and the like; and a communication apparatus 509. The communication apparatus 509 may allow the electronic device 500 to conduct wireless or wired communication with other devices to exchange data. Although FIG. 5 illustrates an electronic device 500 having various apparatuses, it should be understood that it is not required to implement or have all of the illustrated apparatuses. Alternatively, more or fewer apparatuses may be implemented or included. Each block shown in FIG. 5 may represent one apparatus or a plurality of apparatuses as required.

In particular, the processes described above with reference to the flowcharts may be implemented as a computer software program according to some embodiments of the present disclosure. For example, some embodiments of the present disclosure include a computer program product including a computer program loaded on a computer-readable medium, and the computer program includes program code for executing the method shown in the flowchart. In such embodiments, the computer program may be downloaded and installed from the network via the communication apparatus 509, or installed from the storage apparatus 508, or installed from the ROM 502. When the computer program is executed by the processing apparatus 501, the above functions defined in the method of the embodiments of the present disclosure are executed.

It is to be noted that the above computer-readable medium according to some embodiments of the present disclosure may be a computer-readable signal medium or a computer-readable storage medium or any combination thereof. The computer-readable storage medium may be, for example, but is not limited to, an electronic, magnetic, optical, electromagnetic, infrared, or semiconductor system, apparatus, or device, or any combination thereof. More specific examples of the computer-readable storage medium may include, but are not limited to, an electrical connection having one or more wires, a portable computer disk, a hard disk, a random access memory (RAM), a read-only memory (ROM), an erasable programmable read only memory (EPROM or flash memory), an optical fiber, a portable compact disk read-only memory (CD-ROM), an optical storage device, a magnetic storage device, or any suitable combination thereof. In some embodiments of the present disclosure, the computer-readable storage medium may be any tangible medium that contains or stores programs, which may be used by or in connection with an instruction execution system, apparatus, or device. In some embodiments of the present disclosure, the computer-readable signal medium may include a data signal that is propagated in the baseband or propagated as part of a carrier, carrying computer-readable program codes. Such propagated data signals may take various forms, including, but not limited to, electromagnetic signals, optical signals, or any suitable combination thereof. The computer-readable signal medium may also be any computer-readable medium except for the computer-readable storage medium, and the computer-readable signal medium may send, propagate or transmit a program for use by or in connection with an instruction execution system, apparatus or device. Program codes included on the computer-readable medium may be transmitted by any suitable medium, which includes, but is not limited to, a wire, a fiber optic cable, radio frequency (RF), and the like, or any suitable combination thereof.

In some implementations, the client and the server may communicate using any network protocol currently known or developed in the future, such as a HyperText Transfer Protocol (HTTP), and may interconnect with digital data communication (such as a communication network) in any form or medium. Examples of the communication network include a local area network ("LAN"), a wide area networks ("WAN"), an inter-network (e.g., the Internet), a peer-to-peer network (e.g., an ad hoc peer-to-peer network), as well as any network currently known or developed in the future.

The computer-readable medium may be included in the apparatus; or may be separately present and is not incorporated in the electronic device. The computer-readable medium carries one or more programs. The one or more programs, when executed by the electronic device, cause the electronic device to: acquire a data processing result of an edge side for target user data; perform combined learning training based on a combined learning engine, the data processing result and the target user data, to obtain a combined learning training model; store the combined learning training model in a target model base; and call a service-side requirement by using the target model base.

Computer program codes for executing the operations of some embodiments of the present disclosure may be written in one or more programming languages, or combinations thereof, wherein the programming languages include an object-oriented programming language such as Java, Smalltalk, C++, and also include conventional procedural programming language, such as "C" language or similar programming languages. The program codes may be executed entirely on the user's computer, partly executed on the user's computer, executed as an independent software package, partly executed on the user's computer and partly executed on a remote computer, or entirely executed on a remote computer or on a server. In the case of involving the remote computer, the remote computer may be connected to the user's computer through any kind of network, including a local area network (LAN) or a wide area network (WAN), or may be connected to an external computer (e.g., using an Internet service provider to connect via the Internet).

The flowcharts and block diagrams in the drawings illustrate the architecture, function, and operation of possible implementations of systems, methods, and computer program products according to various embodiments of the present disclosure. In this regard, each block of the flowchart or block diagram may represent one module, a program segment, or a portion of the codes, and the module, the program segment, or the portion of codes includes one or more executable instructions for implementing specified logic functions. It should also be noted that in some alternative implementations, the functions marked in the blocks may also occur in an order different from the order marked in the drawings. For example, two successively represented blocks may in fact be executed substantially in parallel, and they may sometimes be executed in an opposite order, depending upon the involved function. It is also to be noted that each block of the block diagrams and/or flowcharts, and combinations of blocks in the block diagrams and/or flowcharts, may be implemented in a dedicated hardware-based system that executes specified functions or operations, or may be implemented by a combination of dedicated hardware and computer instructions.

The units described in some embodiments of the present disclosure may be implemented either in software or in hardware. The units described may also be arranged in a processor, which, for example, may be described as: a processor includes an acquisition unit, a training unit, a storage unit and a call unit. The names of these units do not, in some cases, qualify the units. For example, the acquisition unit may also be described as "a unit for acquiring a data processing result of an edge side for target user data".

The functions described above herein can be performed at least in part by one or more hardware logic components. For example, non-restrictively, usable exemplary logical components of hardware include: a Field Programmable Gate Array (FPGA), an Application Specific Integrated Circuit (ASIC), an Application Specific Standard Product (ASSP), a System on Chip (SOC), a Complex Programmable Logic Device (CPLD), and the like.

## Claims

1. A federated-learning-based Internet of Things data service method, performed by a processor, and comprising:
acquiring (201) a data processing result of an edge computing-side for target user data;
performing (202) federated learning training based on a federated learning engine, the data processing result and the target user data, to obtain a federated learning training model;
storing (203) the federated learning training model in a target model base; and
invoking (204) a service-side requirement by using the target model base,
wherein the step of performing (202) federated learning training based on a federated learning engine, the data processing result and the target user data, to obtain a federated learning training model comprises:
acquiring (301) an initial model;
integrating (302) an objective machine learning algorithm and an objective deep learning algorithm into the federated learning engine;
adding (303) the data processing result and the target user data to a sample set, to obtain a sample set after data addition;
encrypting (304) data in the sample set after data addition to obtain an encrypted sample set as a training sample set for training the initial model; and
performing (305) federated learning training on the initial model by using the training sample set and the federated learning engine, to obtain the federated learning training model.

2. The federated-learning-based Internet of Things data service method according to claim 1, wherein, after the step of acquiring (201) a data processing result of an edge computing-side for target user data, the method further comprises:
performing data asset management on the data processing result, wherein the data asset management comprises at least one of the following: metadata management, data asset storage, data quality management, data authorization and delivery management, and data security management.

3. The federated-learning-based Internet of Things data service method according to claim 1, wherein a training sample in the training sample set comprises sample input data and sample output data, and the federated learning training model is trained by taking the sample input data as input and the sample output data as expected output.

4. The federated-learning-based Internet of Things data service method according to claim 1, wherein the step of storing (203) the federated learning training model in a target model base comprises:
encapsulating the federated learning training model to obtain an encapsulated federated learning training model;
generating an interface of the encapsulated federated learning training model, wherein the interface comprises: a management interface and a call interface; and
storing the encapsulated federated learning training model to the target model base in response to determining completion of generation of the interface.

5. The federated-learning-based Internet of Things data service method according to claim 4, wherein the method further comprises:
acquiring a management instruction in response to detecting a management request from a target management user, wherein the management instruction comprises an interface and management content of a managed model; and
processing, based on the management instruction, models in the target model base whose interfaces are the same as the interface of the managed model.

6. The federated-learning-based Internet of Things data service method according to claim 4, wherein the method further comprises:
acquiring the call interface in response to detecting a call request from a target user;
extracting, from the target model base, a model whose interface is the same as the call interface; and
performing, in response to detecting a federated training request from the target user, federated training on the extracted model and at least one model stored by a terminal device of the target user.

7. A federated-learning-based Internet of Things data service apparatus, comprising:
an acquisition unit (401) configured to acquire a data processing result of an edge computing-side for target user data;
a training unit (402) configured to perform federated learning training based on a federated learning engine, the data processing result and the target user data, to obtain a federated learning training model;
a storage unit (403) configured to store the federated learning training model in a target model base; and
an invoking unit (404) configured to call a service-side requirement by using the target model base,
wherein the step of performing federated learning training based on a federated learning engine, the data processing result and the target user data, to obtain a federated learning training model comprises:
acquiring an initial model;
integrating an objective machine learning algorithm and an objective deep learning algorithm into the federated learning engine;
adding the data processing result and the target user data to a sample set, to obtain a sample set after data addition;
encrypting data in the sample set after data addition to obtain an encrypted sample set as a training sample set for training the initial model; and
performing federated learning training on the initial model by using the training sample set and the federated learning engine, to obtain the federated learning training model.

8. An electronic device (500), comprising:
one or more processors (501); and
a storage apparatus (508) storing one or more programs;
the one or more programs, when executed by the one or more processors (501), causing the one or more processors (501) to perform the method according to claim 1.

9. A computer-readable medium, storing a computer program, wherein, when the program is executed by a processor (501), the program causes the processor to perform the method according to claim 1.

## Patentansprüche

1. Auf föderiertem Lernen basierendes Datenserviceverfahren für das Internet der Dinge, durchgeführt durch einen Prozessor, und umfassend:
Erfassen (201) eines Datenverarbeitungsergebnisses einer Edge-Computing-Einheit für Zielbenutzerdaten;
Durchführen (202) eines Trainings des föderierten Lernens basierend auf einer Engine für föderiertes Lernen, dem Datenverarbeitungsergebnis und den Zielbenutzerdaten, um ein Trainingsmodell für föderiertes Lernen zu erhalten;
Speichern (203) des Trainingsmodells für föderiertes Lernen in einer Zielmodellbasis; und
Aufrufen (204) einer serviceseitigen Anforderung unter Verwendung der Zielmodellbasis,
wobei der Schritt des Durchführens (202) eines Trainings des föderierten Lernens basierend auf einer Engine für föderiertes Lernen, dem Datenverarbeitungsergebnis und den Zielbenutzerdaten, um ein Trainingsmodell für föderiertes Lernen zu erhalten, umfasst:
Erfassen (301) eines Anfangsmodells;
Integrieren (302) eines vorgegebenen Maschinenlernalgorithmus und eines vorgegebenen Deep-Learning-Algorithmus in die Engine für föderiertes Lernen;
Hinzufügen (303) des Datenverarbeitungsergebnisses und der Zielbenutzerdaten zu einer Stichprobenmenge, um eine erweiterte Stichprobenmenge zu erhalten;
Verschlüsseln (304) von Daten in der erweiterten Stichprobenmenge, um eine verschlüsselte Stichprobenmenge als Trainingsstichprobenmenge zum Trainieren des Anfangsmodells zu erhalten; und
Durchführen (305) eines Trainings des föderierten Lernens an dem Anfangsmodell unter Verwendung der Trainingsstichprobenmenge und der Engine für föderiertes Lernen, um das Trainingsmodell für föderiertes Lernen zu erhalten.

2. Das auf föderiertem Lernen basierende Datenserviceverfahren für das Internet der Dinge nach Anspruch 1, wobei das Verfahren nach dem Schritt des Erfassens (201) eines Datenverarbeitungsergebnisses einer Edge-Computing-Einheit für Zielbenutzerdaten ferner umfasst:
Durchführen eines Datenressourcenmanagements an dem Datenverarbeitungsergebnis, wobei das Datenressourcenmanagement mindestens eines der Folgenden umfasst: Metadatenmanagement, Speicherung von Datenbeständen, Datenqualitätsmanagement, Datenautorisierungs- und Bereitstellungsmanagement sowie Datensicherheitsmanagement.

3. Das auf föderiertem Lernen basierende Datenserviceverfahren für das Internet der Dinge nach Anspruch 1, wobei eine Trainingsstichprobe in der Trainingsstichprobenmenge Stichproben-Eingabedaten und Stichproben-Ausgabedaten umfasst, und das Trainingsmodell für föderiertes Lernen trainiert wird, indem die Stichproben-Eingabedaten als Eingabe und die Stichproben-Ausgabedaten als erwartete Ausgabe verwendet werden.

4. Das auf föderiertem Lernen basierende Datenserviceverfahren für das Internet der Dinge nach Anspruch 1, wobei der Schritt des Speicherns (203) des Trainingsmodells für föderiertes Lernen in einer Zielmodellbasis umfasst:
Kapseln des Trainingsmodells für föderiertes Lernen, um ein gekapseltes Trainingsmodell für föderiertes Lernen zu erhalten;
Erzeugen einer Schnittstelle des gekapselten Trainingsmodells für föderiertes Lernen, wobei die Schnittstelle umfasst: eine Verwaltungsschnittstelle und eine Aufrufschnittstelle; und
Speichern des gekapselten Trainingsmodells für föderiertes Lernen in der Zielmodellbasis als Reaktion auf das Bestimmen der Fertigstellung der Erzeugung der Schnittstelle.

5. Das auf föderiertem Lernen basierende Datenserviceverfahren für das Internet der Dinge nach Anspruch 4, wobei das Verfahren ferner umfasst:
Erfassen einer Verwaltungsanweisung als Reaktion auf das Detektieren einer Verwaltungsanforderung von einem Zielverwaltungsbenutzer, wobei die Verwaltungsanweisung eine Schnittstelle und Verwaltungsinhalt eines verwalteten Modells umfasst; und
Verarbeiten, basierend auf der Verwaltungsanweisung, von Modellen in der Zielmodellbasis, deren Schnittstellen gleich der Schnittstelle des verwalteten Modells sind.

6. Das auf föderiertem Lernen basierende Datenserviceverfahren für das Internet der Dinge nach Anspruch 4, wobei das Verfahren ferner umfasst:
Erfassen der Aufrufschnittstelle als Reaktion auf das Detektieren einer Aufrufanforderung von einem Zielbenutzer;
Extrahieren eines Modells aus der Zielmodellbasis, dessen Schnittstelle gleich der Aufrufschnittstelle ist; und
Durchführen, als Reaktion auf das Detektieren einer föderierten Trainingsanforderung von dem Zielbenutzer, eines föderierten Trainings an dem extrahierten Modell und mindestens einem von einer Endgerätevorrichtung des Zielbenutzers gespeicherten Modell.

7. Eine auf föderiertem Lernen basierende Datenservicevorrichtung für das Internet der Dinge, umfassend:
eine Erfassungseinheit (401), konfiguriert zum Erfassen eines Datenverarbeitungsergebnisses einer Edge-Computing-Einheit für Zielbenutzerdaten;
eine Trainingseinheit (402), konfiguriert zum Durchführen eines Trainings des föderierten Lernens basierend auf einer Engine für föderiertes Lernen, dem Datenverarbeitungsergebnis und den Zielbenutzerdaten, um ein
Trainingsmodell für föderiertes Lernen zu erhalten;
eine Speichereinheit (403), konfiguriert zum Speichern des Trainingsmodells für föderiertes Lernen in einer Zielmodellbasis; und
eine Aufrufeinheit (404), konfiguriert zum Aufrufen einer serviceseitigen Anforderung unter Verwendung der Zielmodellbasis,
wobei der Schritt des Durchführens eines Trainings des föderierten Lernens basierend auf einer Engine für föderiertes Lernen, dem Datenverarbeitungsergebnis und den Zielbenutzerdaten, um ein Trainingsmodell für föderiertes Lernen zu erhalten, umfasst:
Erfassen eines Anfangsmodells;
Integrieren eines vorgegebenen Maschinenlernalgorithmus und eines vorgegebenen Deep-Learning-Algorithmus in die Engine für föderiertes Lernen;
Hinzufügen des Datenverarbeitungsergebnisses und der Zielbenutzerdaten zu einer Stichprobenmenge, um eine erweiterte Stichprobenmenge zu erhalten;
Verschlüsseln von Daten in der erweiterten Stichprobenmenge, um eine verschlüsselte Stichprobenmenge als Trainingsstichprobenmenge zum Trainieren des Anfangsmodells zu erhalten; und
Durchführen eines Trainings des föderierten Lernens an dem Anfangsmodell unter Verwendung der Trainingsstichprobenmenge und der Engine für föderiertes Lernen, um das Trainingsmodell für föderiertes Lernen zu erhalten.

8. Eine elektronische Vorrichtung (500), umfassend:
einen oder mehrere Prozessoren (501); und
eine Speichervorrichtung (508), die ein oder mehrere Programme speichert;
wobei das eine oder die mehreren Programme, wenn sie durch den einen oder die mehreren Prozessoren (501) ausgeführt werden, den einen oder die mehreren Prozessoren (501) veranlassen, das Verfahren nach Anspruch 1 durchzuführen.

9. Ein computerlesbares Medium, das ein Computerprogramm speichert, wobei, wenn das Programm durch einen Prozessor (501) ausgeführt wird, das Programm den Prozessor veranlasst, das Verfahren nach Anspruch 1 durchzuführen.

## Revendications

1. Procédé de service de données d'Internet des objets basé sur un apprentissage fédéré, effectué par un processeur, et comprenant :
l'acquisition (201) d'un résultat de traitement de données côté informatique en périphérie pour des données d'utilisateur cibles ;
la réalisation (202) d'un entraînement d'apprentissage fédéré sur la base d'un moteur d'apprentissage fédéré, le résultat de traitement de données et les données d'utilisateur cibles, pour obtenir un modèle d'entraînement d'apprentissage fédéré ;
le stockage (203) du modèle d'entraînement d'apprentissage fédéré dans une base de modèles cibles ; et
l'invocation (204) d'une exigence côté service en utilisant la base de modèles cibles,
dans lequel l'étape de réalisation (202) d'un entraînement d'apprentissage fédéré sur la base d'un moteur d'apprentissage fédéré, du résultat de traitement de données et des données d'utilisateur cibles, pour obtenir un modèle d'entraînement d'apprentissage fédéré comprend :
l'acquisition (301) d'un modèle initial ;
l'intégration (302) d'un algorithme d'apprentissage automatique objectif et d'un algorithme d'apprentissage profond objectif dans le moteur d'apprentissage fédéré ;
l'ajout (303) du résultat de traitement de données et des données d'utilisateur cibles à un ensemble d'échantillons, pour obtenir un ensemble d'échantillons après l'ajout de données ;
le chiffrement (304) de données dans l'ensemble d'échantillons après l'ajout de données pour obtenir un ensemble d'échantillons chiffrés en tant qu'ensemble d'échantillons d'entraînement pour entraîner le modèle initial ; et
la réalisation (305) d'un entraînement d'apprentissage fédéré sur le modèle initial en utilisant l'ensemble d'échantillons d'entraînement et le moteur d'apprentissage fédéré, pour obtenir le modèle d'entraînement d'apprentissage fédéré.

2. Procédé de service de données d'Internet des objets basé sur un apprentissage fédéré selon la revendication 1, dans lequel, après l'étape d'acquisition (201) d'un résultat de traitement de données côté informatique en périphérie pour des données d'utilisateur cibles, le procédé comprend en outre :
la réalisation d'une gestion d'actifs de données sur le résultat de traitement de données, dans lequel la gestion d'actifs de données comprend au moins l'un parmi : la gestion de métadonnées, le stockage d'actifs de données, la gestion de qualité de données, l'autorisation de données et la gestion de livraison, et la gestion de sécurité de données.

3. Procédé de service de données d'Internet des objets basé sur un apprentissage fédéré selon la revendication 1, dans lequel un échantillon d'entraînement dans l'ensemble d'échantillons d'entraînement comprend des données d'entrée d'échantillon et des données de sortie d'échantillon, et le modèle d'entraînement d'apprentissage fédéré est entraîné en prenant les données d'entrée d'échantillon en tant qu'entrées et les données de sortie d'échantillon en tant que sorties attendues.

4. Procédé de service de données d'Internet des objets basé sur un apprentissage fédéré selon la revendication 1, dans lequel l'étape de stockage (203) du modèle d'entraînement d'apprentissage fédéré dans une base de modèles cibles comprend :
l'encapsulation du modèle d'entraînement d'apprentissage fédéré pour obtenir un modèle d'entraînement d'apprentissage fédéré encapsulé ;
la génération d'une interface du modèle d'entraînement d'apprentissage fédéré encapsulé, dans lequel l'interface comprend : une interface de gestion et une interface d'appel ; et
le stockage du modèle d'entraînement d'apprentissage fédéré encapsulé dans la base de modèles cibles en réponse à la détermination de l'achèvement de la génération de l'interface.

5. Procédé de service de données d'Internet des objets basé sur un apprentissage fédéré selon la revendication 4, dans lequel le procédé comprend en outre :
l'acquisition d'une instruction de gestion en réponse à la détection d'une demande de gestion provenant d'un utilisateur de gestion cibles, dans lequel l'instruction de gestion comprend une interface et un contenu de gestion d'un modèle géré ; et
le traitement, sur la base de l'instruction de gestion, de modèles dans la base de modèles cibles dont les interfaces sont les mêmes que l'interface du modèle géré.

6. Procédé de service de données d'Internet des objets basé sur un apprentissage fédéré selon la revendication 4, dans lequel le procédé comprend en outre :
l'acquisition de l'interface d'appel en réponse à la détection d'une demande d'appel provenant d'un utilisateur cible ;
l'extraction, à partir de la base de modèles cibles, d'un modèle dont l'interface est la même que l'interface d'appel ; et
la réalisation, en réponse à la détection d'une demande d'entraînement fédéré provenant de l'utilisateur cible, d'un entraînement fédéré sur le modèle extrait et sur au moins un modèle stocké par un dispositif terminal de l'utilisateur cible.

7. Appareil de service de données d'Internet des objets basé sur un apprentissage fédéré, comprenant :
une unité d'acquisition (401) configurée pour acquérir un résultat de traitement de données côté informatique en périphérie pour des données d'utilisateur cibles ;
une unité d'entraînement (402) configurée pour effectuer un entraînement d'apprentissage fédéré sur la base d'un moteur d'apprentissage fédéré, le résultat de traitement de données et les données d'utilisateur cibles, pour obtenir un modèle d'entraînement
d'apprentissage fédéré ;
une unité de stockage (403) configurée pour stocker le modèle d'entraînement d'apprentissage fédéré dans une base de modèles cibles ; et
une unité d'invocation (404) configurée pour appeler une exigence côté service en utilisant la base de modèles cibles,
dans lequel l'étape de réalisation d'un entraînement d'apprentissage fédéré sur la base d'un moteur d'apprentissage fédéré, du résultat de traitement de données et des données d'utilisateur cibles, pour obtenir un modèle d'entraînement d'apprentissage fédéré comprend :
l'acquisition d'un modèle initial ;
l'intégration d'un algorithme d'apprentissage automatique objectif et d'un algorithme d'apprentissage profond objectif dans le moteur d'apprentissage fédéré ;
l'ajout du résultat de traitement de données et des données d'utilisateur cibles à un ensemble d'échantillons, pour obtenir un ensemble d'échantillons après l'ajout de données ;
le chiffrement de données dans l'ensemble d'échantillons après l'ajout de données pour obtenir un ensemble d'échantillons chiffrés en tant qu'ensemble d'échantillons d'entraînement pour entraîner le modèle initial ; et
la réalisation d'un entraînement d'apprentissage fédéré sur le modèle initial en utilisant l'ensemble d'échantillons d'entraînement et le moteur d'apprentissage fédéré, pour obtenir le modèle d'entraînement d'apprentissage fédéré.

8. Dispositif électronique (500), comprenant :
un ou plusieurs processeur(s) (501) ; et
un appareil de stockage (508) stockant un ou plusieurs programme(s) ;
le ou les programme(s), lorsqu'il/ils est/sont exécuté(s) par le ou les processeur(s) (501), amène/amènent le ou les processeur(s) (501) à effectuer le procédé selon la revendication 1.

9. Support lisible par ordinateur, stockant un programme informatique, dans lequel, lorsque le programme est exécuté par un processeur (501), le programme amène le processeur à effectuer le procédé selon la revendication 1.
